# FASCICULE DE BREVET EUROPEEN

(11) **EP 3 777 556 B1**
(45) Date de publication et mention de la délivrance du brevet: **03.09.2025**
(21) Numéro de dépôt: 20190804.3
(22) Date de dépôt: 06.07.2015
(51) Int. Cl.: A23B 7/04, A47J 39/00, F25D 31/00, A23B 2/82, A23B 4/07

(54) **INSTALLATION DE DÉCONGÉLATION OU DE TEMPÉRAGE DE PRODUITS ALIMENTAIRES CONGELÉS**
ANLAGE ZUM AUFTAUEN ODER TEMPERIEREN VON TIEFGEFRORENEN LEBENSMITTELPRODUKTEN
INSTALLATION FOR DEFROSTING OR TEMPERING OF FROZEN FOOD PRODUCTS

(30) Priorité: 07.07.2014 FR 1456533
(43) Date de publication de la demande: 17.02.2021
(62) Demande divisionnaire de: 15734177.7
(73) Titulaire: Lutetia, 60128 Plailly (FR)
(72) Inventeur: DEUMIER, François, 95160 Montmorency (FR); CECILIA, Frédéric, 95130 Le Plessis-Bouchard (FR); LONGO, Philippe, 92190 Meudon (FR)
(74) Mandataire: Ipsilon

(56) Documents cités:
- JP-A- 2000 262 264
- JP-A- 2002 034 534
- JP-A- 2012 223 119
- JP-A- S60 259 171
- US-A1- 2004 066 835
- US-B1- 6 447 827
- DATABASE WPI Week 198606, Derwent World Patents Index; AN 1986-039136

## Description

La présente invention concerne les installations et procédés de décongélation ou de tempérage de produits alimentaires.

La décongélation consiste en la transformation d'un aliment congelé à une température négative, aussi basse soit-elle, en un aliment décongelé, c'est-à-dire ayant dépassé la température de fusion de l'eau le constituant.

Le tempérage consiste à réchauffer un produit congelé de sa température négative de stockage, aussi basse soit-elle, à une température inférieure à celle de la température de fusion de l'eau le constituant.

US 6 447 827 divulgue un procédé de décongélation et de cuisson ainsi qu'une chambre associée, qui comporte des moyens de ventilation en circuit fermé et des moyens de chauffage des produits à décongeler sous forme d'injecteurs de vapeur. La chambre est équipée de moyens de brumisation.

US 2004/066835 divulgue un dispositif de décongélation comportant des moyens de ventilation, des moyens de chauffage des produits dont un diffuseur de vapeur et un radiateur, ainsi que des moyens de refroidissement de l'air par échangeur thermique.

JP 2000-262264 divulgue une installation de décongélation comportant un réservoir d'eau maintenu à une certaine température par un chauffe-eau. Cette eau est ensuite pulvérisée puis diffusée dans une chambre par un ventilateur. L'air dans la chambre est refroidi par une unité de refroidissement. Ce document ne divulgue pas l'injection de vapeur.

JP 2002-034534 décrit une chambre de décongélation ainsi qu'un procédé associé de contrôle de la température au sein de la chambre. La chambre est équipée de moyens de ventilation et de moyens de chauffage des produits par pulvérisation d'eau. L'installation comporte des moyens de refroidissement de l'air.

Le réservoir d'eau qui alimente le pulvérisateur comporte une entrée d'eau réseau et une entrée d'eau chaude. Deux vannes permettent de contrôler les flux d'eau et ainsi la température de l'eau du réservoir. Un ordinateur de contrôle est doté de capteurs placés en surface et au cœur des produits à décongeler. Il contrôle les vannes et le refroidisseur d'air et permet d'ajuster la température de l'eau pulvérisée et de l'air. Le procédé de décongélation se déroule en deux paliers de température, un de température élevée puis un plus faible.

Ce document ne décrit pas l'emploi de vapeur.

JP 2012-223119 A se rapporte à une chambre de décongélation de taille adaptée aux produits à décongeler, possédant des moyens de chauffage des produits, notamment un réseau de diffusion de vapeur modulable par deux vannes reliées à des bouilleurs non représentés et un système électromagnétique de type micro-onde. Cette demande divulgue également des moyens de refroidissement par brumisation d'eau.

Il n'y a pas de système de ventilation à proprement parler, mais un système d'aspiration par mise sous vide.

Le brevet US 4 898 741 divulgue un procédé et une installation de décongélation dans laquelle de l'eau est pulvérisée dans une cellule de décongélation. Un ventilateur permet de créer une circulation d'air à une vitesse n'excédant pas 5ms⁻¹.

La décongélation ou le tempérage d'un produit suppose de répondre à deux exigences contradictoires que sont d'une part l'intérêt d'une décongélation ou d'un tempérage rapide et d'autre part le maintien en surface d'une température suffisamment faible pour ne pas endommager le produit.

L'intérêt d'une décongélation rapide est d'améliorer la qualité sanitaire des produits alimentaires décongelés, de façon à éviter que la durée de décongélation ne dépasse le temps de latence des bactéries pathogènes et des flores d'altération. On réduit également les pertes par exsudation.

Un autre avantage lié à une décongélation de faible durée est de pouvoir alimenter rapidement les chaînes de fabrication et travailler en flux tendu.

L'intérêt de maintenir la température de surface à une valeur maîtrisée est de préserver au mieux l'aspect après décongélation de certains produits alimentaires sensibles, notamment certains poissons, tels que thon, maquereaux ou sardines, notamment en évitant une décoloration de leur peau ou chair.

L'invention vise à répondre à cette problématique et elle y parvient grâce à une installation de décongélation ou de tempérage de produits alimentaires congelés, comportant :
- une chambre de réception des produits à décongeler ou à tempérer,
- un moyen de ventilation, notamment dirigé horizontalement ou verticalement, pour établir une circulation d'air forcée dans la chambre, à une vitesse supérieure ou égale à 5 ms⁻¹,
- un moyen de chauffage des produits présents dans la chambre, comportant l'un au moins d'un moyen d'injection ou de création de vapeur dans la chambre, notamment de vapeur à une température comprise entre 95°C et 152°C, notamment par diffusion de vapeur basse pression, d'un moyen de pulvérisation, de douchage ou brumisation d'eau chaude ou à température ambiante, d'un moyen de brassage d'air sur un échangeur thermique chaud ou une résistance chauffante, et d'un système électromagnétique haute-fréquence, notamment micro-ondes, et de préférence un moyen d'injection ou de création de vapeur dans la chambre ou un système électromagnétique haute-fréquence,

- un moyen de refroidissement de l'air dans la chambre comportant un moyen de brumisation, de douchage ou de pulvérisation d'eau froide dans la chambre,- une alimentation à relier à un réseau d'eau froide sanitaire et au moins un groupe frigorifique pour refroidir à une température désirée l'eau du réseau avant de la pulvériser, délivrer par douchage ou brumiser,
- un moyen de régulation de la température de l'eau brumisée, douchée ou pulvérisée à une valeur de consigne choisie en fonction d'une température de coeur et/ou d'une température de surface des produits.

Cette pulvérisation ou brumisation ou douchage peut s'effectuer par une ou plusieurs buses, lesquelles peuvent recevoir de l'eau seulement, ou à la fois de l'air et de l'eau. Par « douchage » il faut comprendre la formation d'un jet d'eau continu, et non sous forme de gouttelettes.

Lorsque la pulvérisation ou brumisation d'eau s'effectue avec des buses recevant à la fois de l'air et de l'eau, l'air envoyé dans les buses peut être réchauffé ou refroidi selon les cas, ce qui peut contribuer à réchauffer ou refroidir l'eau pulvérisée ou brumisée.

Par "moyen de ventilation", on désigne tout ventilateur ou turbine permettant de générer une circulation d'air forcée dans la chambre, que l'axe de rotation de ce ventilateur ou turbine soit orienté horizontalement ou verticalement ou autrement. Le ventilateur ou la turbine peut être entraîné par un moteur fixé sur une paroi définissant la chambre. En variante, de l'air en mouvement est injecté dans la chambre, par exemple verticalement ou horizontalement, et produit la circulation d'air forcée indépendamment de la présence d'un ventilateur ou d'une turbine dans la chambre.

Par "moyen d'injection de vapeur", on désigne une sortie de vapeur dans la chambre, la vapeur étant produite à l'extérieur de la chambre, ou une production *in situ* de vapeur dans la chambre, grâce par exemple à l'envoi d'eau liquide sur une partie chaude provoquant la vaporisation de l'eau. Par « création de vapeur » dans la chambre on désigne la formation de vapeur par venue d'eau, notamment sous forme de gouttelettes, au contact d'une surface portée à une température supérieure à la température d'ébullition de l'eau.

Par "moyen de refroidissement de l'air dans la chambre", on désigne un système permettant de prélever des calories dans l'air et de les évacuer hors de la chambre.

Par "moyen d'injection d'air froid par une entrée dédiée", on désigne un conduit permettant d'insuffler de l'air froid dans la chambre, de préférence à une température inférieure ou égale à 10°C.

L'eau pulvérisée ou brumisée dans la chambre peut être refroidie à l'aide d'un groupe frigorifique ou de toute autre source de froid.

L'installation comporte un moyen de pulvérisation, de douchage ou de brumisation d'eau froide, mieux de brumisation, de préférence à une température inférieure à 6°C.

L' 'apport de chaleur s'effectue au moins par injection ou création de vapeur dans la chambre et le refroidissement s'effectue par brumisation d'eau à une température régulée, cette brumisation pouvant avoir lieu en même temps que l'injection ou la création de vapeur.

Le coefficient de transfert à l'interface entre l'aliment et son environnement est de 10 à 100 W.m⁻².K⁻¹ pour l'air contre 500 à 10 000 W.m⁻².K⁻¹ pour l'eau. La présence d'un brouillard d'eau dans la chambre de décongélation, due à la possibilité de brumiser de l'eau grâce à la ou aux buses précitées, favorise donc le transfert de chaleur entre le produit alimentaire et son environnement, en créant un film d'eau à la surface des produits.

L'injection de vapeur d'eau dans la chambre de décongélation est avantageuse en ce qu'elle permet de transférer une importante quantité de chaleur. Au contact de l'aliment, la vapeur d'eau cède sa chaleur latente de changement d'état au produit alimentaire, ce qui représente environ 2 260 kJ/kg de vapeur.

Les transferts de chaleur sont d'autant plus efficaces que le renouvellement de la surface de contact entre les produits alimentaires et le(s) fluide(s) caloporteurs est rapide. Ce renouvellement est réalisé par l'entretien de conditions turbulentes, qui peuvent être obtenues grâce au moyen de ventilation, lequel est de préférence agencé pour induire des vitesses d'air supérieures à 5 m.s⁻¹, mieux à 10 m.s⁻¹.

L'échauffement de l'air induit par ce fort brassage est toutefois atténué par les moyens de refroidissement de l'air, et de préférence par la pulvérisation ou brumisation de l'eau dans la chambre, grâce à la ou aux buses.

L'installation selon l'invention permet ainsi de réchauffer rapidement les produits alimentaires tout en évitant que la température de surface ne grimpe pas trop, ni trop vite, et n'affecte outre mesure l'aspect des aliments.

L'invention permet en outre, en agissant sur la température de l'eau pulvérisée ou brumisée, et/ou le cas échéant sur celle de l'air alimentant les buses correspondantes, de réguler relativement précisément l'apport de chaleur en fonction des contraintes imposées à la température de surface, et ainsi de maîtriser cette température au bénéfice de la qualité de la décongélation.

Cette température de surface dépend, dans l'invention, des paramètres suivants :
- l'apport de chaleur extérieur par la conversion d'énergie cinétique en chaleur par la ventilation, par la vapeur, l'air et le brouillard d'eau,
- le transfert de frigories du cœur congelé du produit vers la surface,
- l'apport de frigories externes par l'air ou l'eau présent dans la chambre dans l'environnement immédiat des produits.

En première partie de décongélation ou de tempérage, les deux premiers paramètres peuvent relativement facilement s'équilibrer, alors qu'en seconde partie de décongélation ou de tempérage, le transfert de frigories du cœur vers la surface est susceptible d'être insuffisant pour compenser l'apport de chaleur induit par les sources de chaleur précitées. En effet, si la régulation peut interdire l'injection de vapeur, la ventilation seule peut suffire à échauffer l'ambiance, par conversion de l'énergie cinétique de l'air en chaleur.

La pulvérisation, mieux la brumisation, d'eau refroidie présente l'avantage de maintenir des conditions favorables au transfert de chaleur en surface, sans autoriser d'emballement de la température de surface. En particulier, la présence d'un brouillard d'eau refroidie peut aussi permettre de compenser sur un temps plus long la conversion en chaleur de l'énergie cinétique d'une forte ventilation. La qualité de la décongélation est améliorée, et certains produits peuvent, grâce à l'invention, présenter après décongélation une apparence qui diffère très peu de celle des produits frais avant congélation.

Selon les exigences, l'installation selon l'invention peut ainsi permettre de maintenir en simultané un brouillard d'eau refroidie, une injection de vapeur basse pression et une ventilation élevée.

L'installation peut comporter un moyen de brumisation d'eau chaude ou à température supérieure ou égale à 15°C ou à température ambiante (20°C).

Un refroidissement de l'air injecté ou brassé peut avoir lieu simultanément à l'introduction du brouillard d'eau refroidie par brumisation d'eau.

L'installation comporte un moyen de régulation de la température de l'eau pulvérisée, délivrée par douchage ou brumisée à une valeur de consigne choisie en fonction de la température des produits, notamment de leur température de surface. Ce moyen de régulation peut également agir, le cas échéant, sur la température de l'air injecté dans la ou les buses de pulvérisation ou brumisation. Lorsque la régulation s'effectue en fonction du temps, des actions correspondant à des séquences temporelles sont prédéfinies et exécutées grâce à une base de temps.

La circulation d'air forcée peut s'effectuer en circuit fermé, par exemple à l'aide d'un ventilateur placé en partie haute de la chambre.

L'installation comporte une alimentation à relier à un réseau d'eau froide sanitaire et le moyen de refroidissement de l'eau peut être constitué d'au moins un groupe frigorifique agencé pour refroidir à une température désirée, par exemple à une température inférieure ou égale à 10°C, l'eau du réseau avant de la pulvériser ou brumiser. Ce groupe frigorifique peut également être utilisé pour refroidir l'air injecté dans la chambre et/ou brassé dans celle-ci.

Le moyen de ventilation est agencé pour produire une circulation d'air forcée à une vitesse supérieure ou égale à 5 ms⁻¹, mieux à une vitesse supérieure ou égale à 10 ms⁻¹, en au moins un emplacement de la chambre, la vitesse de l'air étant de préférence réduite avec l'avancement du cycle de décongélation ou de tempérage.

L'installation peut comporter une alimentation à relier à un réseau sanitaire d'eau chaude ou un réchauffeur d'eau externe à la chambre, de façon à pouvoir délivrer par douchage, pulvériser ou brumiser l'eau à une température supérieure à 20°C ou 25°C dans la chambre, notamment au début du processus de décongélation ou du tempérage.

Le moyen de refroidissement de l'air dans la chambre peut comporter un ou plusieurs échangeurs de chaleur, par exemple à tubes, dans lesquels circule un fluide, par exemple de l'eau glycolée. Cette eau glycolée peut être celle d'un réseau d'eau glycolée présent dans l'usine, et peut servir par ailleurs à refroidir l'eau qui est ou brumisée, et le cas échéant l'air injecté dans les buses de pulvérisation ou brumisation. Cette eau glycolée peut également être refroidie par un groupe frigorifique spécifique à l'installation et par exemple fixé à une paroi délimitant la chambre.

Lorsque l'installation comporte un système d'entrée et sortie d'air de la chambre, il peut s'agir d'air froid provenant de l'environnement extérieur direct de la cellule, par exemple si cette dernière est placée dans une salle froide.

L'invention a encore pour objet, selon un autre de ses aspects, un procédé de décongélation ou de tempérage de produits alimentaires congelés présents dans la chambre d'une installation de décongélation ou de tempérage, notamment présentant l'une au moins des caractéristiques ci-dessus, ce procédé comportant les étapes consistant à :
- soumettre les produits à décongeler ou à tempérer à une circulation d'air forcée dans la chambre, notamment avec une vitesse d'air supérieure ou égale à 5 ms⁻¹, ainsi qu'à une injection de vapeur et à un douchage, pulvérisation ou brumisation d'eau, l'eau brumisée, délivrée par douchage ou pulvérisée ayant de préférence en fin de décongélation ou de tempérage une température inférieure ou égale à 10°C, mieux à 5°C.

L'eau qui est pulvérisée ou brumisée l'est de préférence à une température contrôlée. On peut ainsi faire varier la température de l'eau pulvérisée ou brumisée en fonction d'une température mesurée en surface des produits et/ou à cœur des produits. Cela permet de maîtriser la température de surface et ainsi de préserver la qualité des produits.

La circulation d'air forcée s'effectue de préférence avec une vitesse d'air d'au moins 5 ms⁻¹ en au moins un emplacement de la chambre, mieux d'au moins 10 ms⁻¹.

La température initiale des produits congelés peut être inférieure ou égale à - 30°C.

L'injection de vapeur peut avoir lieu pendant le douchage ou la pulvérisation ou brumisation d'eau, notamment d'eau refroidie.

La circulation d'air forcée peut s'effectuer selon au moins deux régimes de vitesses d'air, différents en fonction de l'état de décongélation ou tempérage des produits, notamment un régime de grande vitesse au début du processus de décongélation et un régime de petite vitesse en fin de décongélation ou tempérage. Bien entendu, l'invention n'est pas limitée à une modification de la vitesse et celle-ci peut, en variante, rester constante.

L'injection de vapeur peut être interrompue à partir d'un certain degré de décongélation ou de tempérage des produits, tandis que le douchage, la pulvérisation ou brumisation d'eau est maintenu. La température de l'eau délivrée par douchage, pulvérisée ou brumisée après arrêt de l'injection de vapeur est de préférence inférieure ou égale à 5°C.

La température de l'eau délivrée par douchage, pulvérisée ou brumisée peut ainsi varier de T₁ au début du processus de décongélation ou de tempérage à T₂ en fin dudit processus, avec T₂<T₁, et de préférence T₁>10°C et T₂<6°C.

L'invention pourra être mieux comprise à la lecture de la description qui va suivre, d'un exemple non limitatif de mise en œuvre de celle-ci, et à l'examen du dessin annexé, sur lequel :
- la figure 1 représente, en perspective, un exemple d'installation de décongélation ou de tempérage selon l'invention, et
- la figure 2 représente un détail de la figure 1.

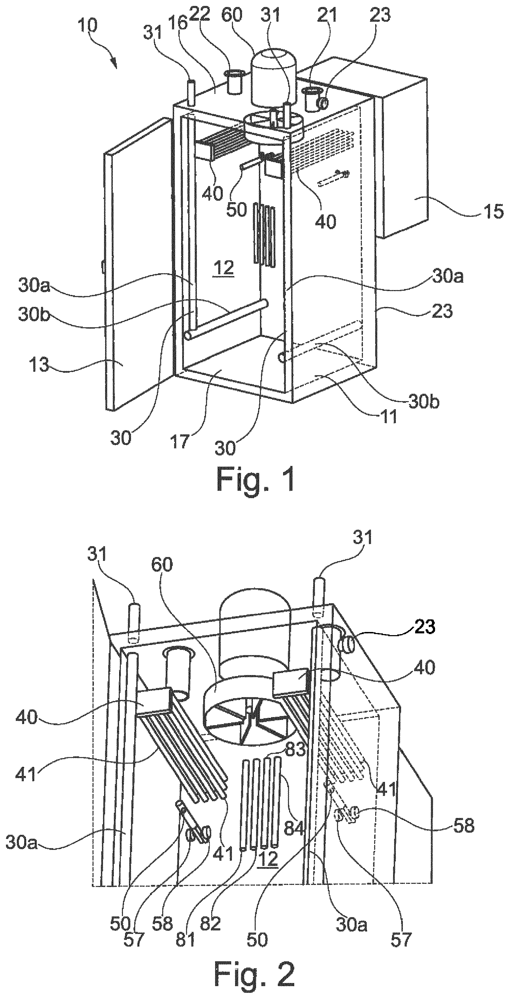

L'installation 10 de décongélation ou de tempérage selon l'invention, représentée aux figures 1 et 2, comporte un bâti 11, encore appelé cellule de décongélation ou de tempérage, définissant une chambre 12 dans laquelle peuvent être introduits les produits alimentaires à décongeler ou à tempérer. Le bâti 11 est de préférence en inox.

Une porte 13 permet d'accéder à la chambre 12 pour amener et enlever les produits, lesquels peuvent être présents sur un chariot.

L'installation 10 peut comporter, comme illustré, un groupe frigorifique 15, qui est par exemple fixé sur le bâti 11 du côté opposé à la porte 13.

La chambre 12 peut communiquer avec l'extérieur par une entrée d'air 21 et une sortie d'air 22, situées de préférence sur la paroi supérieure du bâti 11. Ces entrée et sortie peuvent être équipées de clapets anti-retour.

Les clapets d'entrée et de sortie d'air sont ouverts si l'on souhaite faire entrer de l'air ambiant provenant de l'extérieur. Cet air peut être celui d'une zone chaude (25°C) ou celui d'une zone froide (4°C). L'ouverture peut aussi résulter d'une demande de régulation d'humidité relative.

L'entrée d'air 21 peut être munie d'une sonde de température 23 permettant de connaître la température de l'air entrant. Ce dernier peut être un air refroidi si la cellule est placée dans une salle froide, dont la température est comprise par exemple entre -10°C et +10°C.

L'installation 10 comporte des rampes 30 de diffusion de vapeur dans la chambre 12. Ces rampes 30 communiquent avec des entrées de vapeur 31, reliées à des canalisations d'amenée de vapeur, non représentées. Dans l'exemple illustré, les rampes 30 sont au nombre de deux, étant respectivement situées à proximité des parois verticales gauche et droite du bâti 11. Elles présentent chacune un tronçon vertical 30a, qui s'étend depuis la paroi supérieure 16 du bâti 11 sur la majeure partie de la hauteur de la chambre 12, et un tronçon horizontal 30b qui s'étend non loin du plancher 17 de la chambre 12.

L'installation 10 peut comporter, comme illustré, un ou plusieurs échangeurs de chaleur 40, présents dans la chambre 12 pour refroidir l'air dans celle-ci.

Ces échangeurs 40 sont par exemple au nombre de deux, comme illustré, étant présents en partie haute de la chambre 12. Il peut s'agir d'échangeurs tubulaires eau/air, l'air de la chambre 12 circulant à l'extérieur des tubes 41, ces derniers étant horizontaux et parcourus par de l'eau froide glycolée. Celle-ci est par exemple refroidie par le groupe frigorifique 15, ou provient d'un réseau d'eau froide glycolée de l'usine.

L'installation 10 comporte des buses 50 de brumisation d'eau ou d'un mélange air/eau à l'intérieur de la chambre 12, afin de créer un brouillard d'eau dans celle-ci. La granulométrie des gouttelettes brumisées est par exemple de l'ordre de 1 à 60µm.

Les buses 50 sont de préférence placées, comme illustré, en-dessous des échangeurs 40, en partie haute de la chambre 12.

Un ventilateur 60, dont le moteur est à l'extérieur de la chambre 12, crée une circulation d'air forcée à l'intérieur de la chambre 12, avec une vitesse d'air supérieure à 5 ms⁻¹ mieux à 10 ms⁻¹.

L'axe du ventilateur 60 peut être vertical et situé entre les échangeurs 40.

L'installation 10 peut comporter une centrale de régulation, encore appelée automate, programmable, permettant de contrôler le fonctionnement des différents éléments de l'installation, afin de soumettre les produits à décongeler, ou à tempérer, à des conditions adaptées à leur réchauffement.

Diverses sondes de température sont reliées à cette centrale, et la régulation s'effectue notamment en fonction des températures mesurées.

L'installation 10 peut ainsi comporter plusieurs sondes, telles qu'une sonde à cœur 81, une sonde de surface 82, une sonde d'humidité relative 83 et une sonde de température d'air 84.

Dans le cas où les buses 50 reçoivent de l'air comprimé et de l'eau, comme illustré, chaque arrivée d'air ou d'eau peut être équipée d'une sonde de température 57, 58 correspondante.

L'eau alimentant les buses ainsi que l'air alimentant les buses peuvent ainsi être contrôlés en température.

La sonde d'humidité relative 83 peut également servir à commander la brumisation selon la programmation de la centrale, l'admission de vapeur et l'entrée d'air, si par exemple on met une consigne d'humidité relative. La régulation peut jouer sur le paramètre d'humidité relative en fonction de la température.

La vapeur qui est diffusée dans la chambre 12 est par exemple à une température comprise entre 99 et 152°C

L'eau qui est brumisée par les buses 50 peut être de l'eau froide, tiède ou chaude, sa température étant de préférence contrôlée par la centrale de régulation à la température souhaitée, qui peut varier selon l'instant dans le cycle de décongélation ou de tempérage. L'eau brumisée et/ou l'air comprimé est refroidi à l'aide du groupe frigorifique 15 dans l'exemple illustré.

Pour effectuer un cycle de décongélation ou de tempérage, les aliments présents dans la chambre 12, par exemple disposés sur un chariot adapté, sur plusieurs étages, sont soumis par exemple à :
- une diffusion de vapeur par les rampes 30,
- une circulation d'une forcée générée par le ventilateur 60, de préférence à une vitesse d'au moins 5 ms⁻¹,
- une brumisation d'eau par les buses 50.

La température de l'eau brumisée et de l'air qui accompagne cette brumisation peut diminuer en fonction de la température à cœur des aliments, de plus de 10°C au début quand les aliments sont les plus froids à moins de 6°C, par exemple quand l'injection de vapeur est interrompue en fin de cycle.

La centrale de régulation reçoit les signaux des sondes de température et commande des électrovannes d'admission de vapeur dans les rampes 30 et de pulvérisation d'eau par les buses 50, la vitesse du ventilateur 60 et la température à laquelle l'eau est brumisée par les buses, de façon à optimiser la décongélation ou le tempérage en cherchant à faire progresser au plus vite la température des aliments tout en maintenant la température de surface de ceux-ci à une valeur suffisamment faible pour altérer le moins possible l'aspect de l'aliment.

L'invention n'est pas limitée à l'exemple illustré et l'on peut par exemple modifier la géométrie de la chambre 12, le nombre et l'emplacement des rampes 30 de diffusion de vapeur, le nombre et l'emplacement des buses 50 ou des échangeurs 40, et le positionnement du ventilateur 60.

Dans une variante, les buses de brumisation sont uniquement alimentées par de l'eau sous pression. Les buses de brumisation peuvent être remplacées par des buses de pulvérisation, qui ne créent pas de brouillard mais une pluie de gouttelettes dans la chambre.

L'expression « comportant un » doit se comprendre comme étant synonyme de « comprenant au moins un », sauf si le contraire est spécifié.

## Revendications

1. Installation (10) de décongélation ou de tempérage de produits alimentaires congelés, comportant :
- Une chambre (12) de réception des produits à décongeler ou à tempérer,
- un moyen de ventilation (60), notamment dirigé horizontalement ou verticalement, pour établir une circulation d'air forcée dans la chambre, à une vitesse supérieure ou égale à 5 ms⁻¹,
- un moyen de chauffage des produits présents dans la chambre, comportant l'un au moins d'un moyen (30) d'injection ou de création de vapeur dans la chambre, notamment de vapeur à une température comprise entre 95°C et 152°C, notamment par diffusion de vapeur basse pression, d'un moyen de pulvérisation, de douchage ou brumisation d'eau chaude ou à température ambiante, d'un moyen de brassage d'air sur un échangeur thermique chaud ou une résistance chauffante, et d'un système électromagnétique haute-fréquence, notamment micro-ondes, et de préférence un moyen (30) d'injection ou de création de vapeur dans la chambre ou un système électromagnétique haute-fréquence,
- un moyen de refroidissement de l'air dans la chambre comportant un moyen de brumisation, de douchage ou de pulvérisation d'eau froide dans la chambre (12),
- une alimentation à relier à un réseau d'eau froide sanitaire et au moins un groupe frigorifique (15) pour refroidir à une température désirée l'eau du réseau avant de la pulvériser, délivrer par douchage ou brumiser,
- un moyen de régulation de la température de l'eau brumisée, douchée ou pulvérisée à une valeur de consigne choisie en fonction d'une température de cœur et/ou d'une température de surface des produits.

2. Installation (10) selon la revendication 1, comportant un moyen de brumisation d'eau chaude ou à température supérieure ou égale à 15°C ou à température ambiante (20°C).

3. Installation (10) selon l'une des revendications 1 et 2, comportant un moyen de brassage d'air sur un échangeur thermique froid (40).

4. Installation (10) selon l'une quelconque des revendications 1 à 3, comportant un moyen d'injection ou de création de vapeur dans la chambre (12).

5. Installation (10) selon l'une quelconque des revendications 1 à 4, le groupe frigorifique (15) étant agencé pour refroidir l'eau du réseau à une température inférieure ou égale à 10°C.

6. Installation (10) selon l'une quelconque des revendications 1 à 5, la circulation d'air forcée s'effectuant en circuit fermé.

7. Installation (10) selon l'une quelconque des revendications 1 à 6, le groupe frigorifique (15) étant porté par une paroi d'un bâti définissant la chambre (12).

8. Installation (10) selon l'une quelconque des revendications précédentes, le moyen de ventilation (60) produisant une circulation d'air forcée à une vitesse supérieure ou égale à 5 ms⁻¹ en au moins un emplacement de la chambre (12).

9. Installation (10) selon l'une quelconque des revendications précédentes, le moyen de ventilation (60) produisant une circulation d'air forcée à une vitesse supérieure ou égale à 10 ms⁻¹ en au moins un emplacement de la chambre (12).

10. Installation (10) selon l'une quelconque des revendications précédentes, comportant une alimentation à relier à un réseau sanitaire d'eau chaude ou un réchauffeur d'eau externe à la chambre (12), de façon à pouvoir délivrer par douchage, pulvériser ou brumiser l'eau à une température supérieure à 20°C ou 25°C dans la chambre (12), notamment au début du processus de décongélation ou de tempérage.

11. Procédé de décongélation ou de tempérage de produits alimentaires congelés présents dans une chambre (12) d'une installation (10) de décongélation ou de tempérage telle que définie à l'une quelconque des revendications 1 à 10, comportant les étapes consistant à :
- soumettre les produits à décongeler ou à tempérer à une circulation d'air forcée dans la chambre, ainsi qu'à une injection de vapeur et à un douchage ou à une pulvérisation ou brumisation d'eau, de préférence une pulvérisation ou brumisation, l'eau étant délivrée par douchage, brumisée ou pulvérisée à une température contrôlée, de préférence à une température inférieure à 10°C, mieux à 6°C et dans lequel on fait de préférence varier la température de l'eau délivrée par douchage, brumisée ou pulvérisée en fonction d'une température mesurée en surface des produits et/ou d'une température mesurée au cœur des produits.

12. Procédé selon la revendication 11, la circulation d'air forcée s'effectuant avec une vitesse d'air d'au moins 5 ms⁻¹ en au moins un emplacement de la chambre, la vitesse de l'air étant de préférence réduite avec l'avancement du cycle de décongélation ou de tempérage.

13. Procédé selon l'une quelconque des revendications 11 à 12, la circulation d'air forcée s'effectuant avec une vitesse d'air d'au moins 10 ms⁻¹ en au moins un emplacement de la chambre, la vitesse de l'air étant de préférence réduite avec l'avancement du cycle de décongélation ou de tempérage, la température initiale des produits congelés étant de préférence inférieure ou égale à -30°C, l'injection de vapeur ayant de préférence lieu pendant le douchage, la pulvérisation ou brumisation d'eau, la circulation d'air forcée s'effectuant de préférence selon au moins deux régimes de vitesse d'air différents en fonction de l'état de décongélation ou de tempérage des produits, notamment un régime de grande vitesse au début du processus de décongélation ou de tempérage et un régime de petite vitesse en fin de décongélation ou de tempérage.

14. Procédé selon l'une quelconque des revendications 11 à 13, l'injection de vapeur étant interrompue à partir d'un certain degré de décongélation ou de tempérage des produits, tandis que le douchage, la pulvérisation ou brumisation d'eau est maintenue, la température de l'eau brumisée ou pulvérisée après arrêt de l'injection de vapeur étant de préférence inférieure ou égale à 5°C.

15. Procédé selon l'une quelconque des revendications 11 à 14, la température de l'eau délivrée par douchage, brumisée ou pulvérisée variant de T₁ au début du processus de décongélation ou de tempérage à T₂ en fin dudit processus, avec T₂<T₁, et de préférence T₁> 10 °C et T₂ < 6°C.

## Patentansprüche

1. Anlage (10) zum Auftauen oder Temperieren von gefrorenen Lebensmittelprodukten, umfassend:
- eine Kammer (12) zur Aufnahme der aufzutauenden bzw. zu temperierenden Produkte,
- ein Belüftungsmittel (60), das insbesondere horizontal oder vertikal ausgerichtet ist, um in der Kammer eine erzwungene Luftzirkulation mit einer Geschwindigkeit von 5 ms⁻¹ oder mehr zu erzeugen,
- ein Mittel zum Erwärmen der in der Kammer vorhandenen Produkte, umfassend zumindest eines aus einem Mittel (30) zum Einspritzen oder Erzeugen von Dampf in der Kammer, insbesondere von Dampf mit einer Temperatur zwischen 95 °C und 152 °C, insbesondere durch Niederdruck-Dampfdiffusion, einem Mittel zum Versprühen, Verspritzen oder Vernebeln von heißem Wasser oder Wasser mit Umgebungstemperatur, einem Mittel zum Umwälzen von Luft auf einem heißen Wärmetauscher oder einem Heizwiderstand, und einem hochfrequenten elektromagnetischen System, insbesondere einem Mikrowellensystem, und vorzugsweise ein Mittel (30) zum Einspritzen oder Erzeugen von Dampf in der Kammer oder ein hochfrequentes elektromagnetisches System,
- ein Mittel zum Kühlen der Luft in der Kammer, umfassend ein Mittel zum Vernebeln, Verspritzen oder Versprühen von kaltem Wasser in der Kammer (12),
- eine mit einem sanitären Kaltwassernetz zu verbindende Versorgung und mindestens ein Kühlaggregat (15), um das Wasser aus dem Netz vor dem Versprühen, Verspritzen oder Vernebeln auf eine gewünschte Temperatur abzukühlen,
- ein Mittel zur Regelung der Temperatur des vernebelten, verspritzten bzw. versprühten Wassers auf einen Sollwert, der in Abhängigkeit von einer Kerntemperatur und/oder einer Oberflächentemperatur der Produkte gewählt wird.

2. Anlage (10) nach Anspruch 1, umfassend ein Mittel zum Vernebeln von warmem Wasser oder Wasser mit einer Temperatur von 15 °C oder mehr oder Raumtemperatur (20 °C).

3. Anlage (10) nach einem der Ansprüche 1 und 2, umfassend ein Mittel zum Umwälzen von Luft auf einem kalten Wärmetauscher (40).

4. Anlage (10) nach einem der Ansprüche 1 bis 3, umfassend ein Mittel zum Einspritzen oder Erzeugen von Dampf in der Kammer (12).

5. Anlage (10) nach einem der Ansprüche 1 bis 4, wobei das Kühlaggregat (15) angeordnet ist, um das Wasser aus dem Netz auf eine Temperatur von 10 °C oder weniger zu kühlen.

6. Anlage (10) nach einem der Ansprüche 1 bis 5, wobei die erzwungene Luftzirkulation in einem geschlossenen Kreislauf erfolgt.

7. Anlage (10) nach einem der Ansprüche 1 bis 6, wobei das Kühlaggregat (15) von einer Wand eines die Kammer (12) definierenden Gestells getragen wird.

8. Anlage (10) nach einem der vorangehenden Ansprüche, wobei das Belüftungsmittel (60) an mindestens einer Stelle der Kammer (12) eine erzwungene Luftzirkulation mit einer Geschwindigkeit von 5 ms⁻¹ oder mehr erzeugt.

9. Anlage (10) nach einem der vorangehenden Ansprüche, wobei das Belüftungsmittel (60) an mindestens einer Stelle der Kammer (12) eine erzwungene Luftzirkulation mit einer Geschwindigkeit von 10 ms⁻¹ oder mehr erzeugt.

10. Anlage (10) nach einem der vorangehenden Ansprüche, umfassend eine mit einem sanitären Warmwassernetz oder einem Wassererwärmer außerhalb der Kammer (12) verbundene Versorgung, um das Wasser mit einer Temperatur mehr als 20 °C oder 25 °C durch Verspritzen, Versprühen oder Verdampfen in die Kammer (12) abgeben zu können, insbesondere zu Beginn des Abtau- bzw. Temperiervorgangs.

11. Verfahren zum Abtauen oder Temperieren von Lebensmittelprodukten, die in einer Kammer (12) einer Abtau- oder Temperieranlage (10) nach einem der Ansprüche 1 bis 10 vorhanden sind, umfassend die aus Folgendem bestehenden Schritte:
- die abzutauenden bzw. zu temperierenden Produkte werden einer erzwungenen Luftzirkulation in der Kammer, einer Einspritzung von Dampf sowie einem Verspritzen, Versprühen oder Vernebeln von Wasser ausgesetzt, wobei das Wasser durch Verspritzen, Versprühen oder Vernebeln mit einer kontrollierten Temperatur, vorzugsweise einer Temperatur von weniger als 10 °C, bevorzugt 6 °C, abgegeben wird, und wobei die Temperatur des durch Verspritzen, Vernebeln oder Versprühen abgegebenen Wassers vorzugsweise in Abhängigkeit von einer an der Oberfläche der Produkte gemessenen Temperatur und/oder einer im Kern der Produkte gemessenen Temperatur variiert wird.

12. Verfahren nach Anspruch 11, wobei die erzwungene Luftzirkulation mit einer Luftgeschwindigkeit von mindestens 5 ms⁻¹ an mindestens einer Stelle der Kammer erfolgt, wobei die Luftgeschwindigkeit vorzugsweise mit zunehmendem Fortschritt des Abtau- bzw. Temperierzyklus reduziert wird.

13. Verfahren nach einem der Ansprüche 11 bis 12, wobei die erzwungene Luftzirkulation mit einer Luftgeschwindigkeit von mindestens 10 ms⁻¹ an mindestens einer Stelle der Kammer erfolgt, wobei die Luftgeschwindigkeit vorzugsweise mit zunehmendem Fortschritt des Abtau- bzw. Temperierzyklus reduziert wird, wobei die Anfangstemperatur der gefrorenen Produkte vorzugsweise -30 °C oder weniger beträgt, wobei die Einspritzung von Dampf vorzugsweise während des Verspritzens, Versprühens bzw. Vernebelns von Wasser stattfindet, wobei die erzwungene Luftzirkulation in Abhängigkeit vom Abtau- bzw. Temperierzustand der Produkte vorzugsweise nach mindestens zwei verschiedenen Geschwindigkeitsregimen erfolgt, insbesondere einem Regime mit hoher Geschwindigkeit zu Beginn des Abtau- bzw. Temperiervorgangs und einem Regime mit geringer Geschwindigkeit am Ende des Abtauens bzw. Temperierens.

14. Verfahren nach einem der Ansprüche 11 bis 13, wobei die Dampfeinspritzung ab einem bestimmten Abtau- bzw. Temperiergrad der Produkte unterbrochen wird, während das Verspritzen, Versprühen bzw. Vernebeln von Wasser beibehalten wird, wobei die Temperatur des vernebelten bzw. versprühten Wassers nach Beendigung der Dampfeinspritzung vorzugsweise 5 °C oder weniger beträgt.

15. Verfahren nach einem der Ansprüche 11 bis 14, wobei die Temperatur des durch Verspritzen, Vernebeln oder Versprühen abgegebenen Wassers von T₁ zu Beginn des Abtau- bzw. Temperiervorgangs bis zu T₂ am Ende des Vorgangs variiert, wobei T₂ < T₁ und wobei vorzugsweise T₁ > 10 °C und T₂ < 6 °C.

## Claims

1. Installation (10) for thawing or tempering frozen food products, including:
- a chamber (12) for receiving the products to be thawed or tempered,
- a ventilation means (60), notably directed horizontally or vertically, for establishing a forced flow of air in the chamber, at a speed greater than or equal to 5 ms⁻¹,
- a means for heating the products present in the chamber, including at least one of a means (30) for creation or injection of steam in (to) the chamber, notably steam at a temperature of between 95°C and 152°C, notably by low-pressure steam diffusion, a means for spraying, showering or misting hot water or water at room temperature, a means for agitating air on a hot heat exchanger or a heating resistor, and a high-frequency, notably microwave, electromagnetic system, and preferably a means (30) for creation or injection of steam in (to) the chamber or a high-frequency electromagnetic system,
- a means for cooling the air in the chamber including a means for misting, showering or spraying cold water in the chamber (12),
- a feed to be connected to a domestic cold water main and at least one refrigerator unit (15) for cooling the water from the main to a desired temperature before spraying it, delivering it by showering or misting it,
- a means for regulating the temperature of the misted, showered or sprayed water to a setpoint value chosen as a function of a core temperature and/or a surface temperature of the products.

2. Installation (10) according to Claim 1, including a means for misting hot water or water at a temperature greater than or equal to 15°C or at room temperature (20°C) .

3. Installation (10) according to either of Claims 1 and 2, including a means for agitating air on a cold heat exchanger (40).

4. Installation (10) according to any one of Claims 1 to 3, including a means for creation or injection of steam in (to) the chamber (12).

5. Installation (10) according to any one of Claims 1 to 4, the refrigerator unit (15) being designed to cool the water from the main to a temperature less than or equal to 10°C.

6. Installation (10) according to any one of Claims 1 to 5, the forced flow of air being effected in a closed circuit.

7. Installation (10) according to any one of Claims 1 to 6, the refrigerator unit (15) being borne by a wall of a frame defining the chamber (12).

8. Installation (10) according to any one of the preceding claims, the ventilation means (60) producing a forced flow of air at a speed greater than or equal to 5 ms⁻¹ at at least one location in the chamber (12).

9. Installation (10) according to any one of the preceding claims, the ventilation means (60) producing a forced flow of air at a speed greater than or equal to 10 ms⁻¹ at at least one location in the chamber (12).

10. Installation (10) according to any one of the preceding claims, including a feed to be connected to a domestic hot water main or a water heater external to the chamber (12), so as to be able to deliver by showering, spray or mist the water at a temperature greater than 20°C or 25°C into the chamber (12), notably at the beginning of the thawing or tempering process.

11. Method for thawing or tempering frozen food products present in a chamber (12) of a thawing or tempering installation (10) as defined in any one of Claims 1 to 10, including the steps consisting in:
- subjecting the products to be thawed or tempered to a forced flow of air in the chamber, and injection of steam and showering or spraying or misting with water, preferably spraying or misting, the water being delivered by showering, misted or sprayed at a controlled temperature, preferably at a temperature below 10°C, better still below 6°C and in which the temperature of the water delivered by showering, misted or sprayed is preferably varied as a function of a temperature measured at the surface of the products and/or a temperature measured at the core of the products.

12. Method according to Claim 11, the forced flow of air being effected with an air speed of at least 5 ms⁻¹ at at least one location in the chamber, the speed of the air preferably being reduced as the thawing or tempering cycle progresses.

13. Method according to either one of Claims 11 and 12, the forced flow of air being effected with an air speed of at least 10 ms⁻¹ at at least one location in the chamber, the speed of the air preferably being reduced as the thawing or tempering cycle progresses, the initial temperature of the frozen products preferably being less than or equal to -30°C, the injection of steam preferably taking place during the showering, spraying or misting of water, the forced flow of air preferably being effected in accordance with at least two different air speed regimes as a function of the state of thawing or of tempering of the products, notably a high speed regime at the beginning of the thawing or tempering process and a low speed regime at the end of thawing or tempering.

14. Method according to any one of Claims 11 to 13, the injection of steam being interrupted from a certain degree of thawing or of tempering of the products, while the showering, spraying or misting of water is maintained, the temperature of the water misted or sprayed after stopping the injection of steam preferably being less than or equal to 5°C.

15. Method according to any one of Claims 11 to 14, the temperature of the water delivered by showering, misted or sprayed varying from T₁ at the beginning of the thawing or tempering process to T₂ at the end of said process, with T₂<T₁, and preferably T₁ > 10°C and T₂ < 6°C.
